# EUROPEAN PATENT APPLICATION

(11) **EP 0 921 471 A1**
(43) Date of publication of application: **09.06.1999**
(21) Application number: 98401530.5
(22) Date of filing: 22.06.1998
(51) Int. Cl.: G06F 12/08

(54) **Cache architecture**

(30) Priority: 05.12.1997 EP 97402958
(71) Applicant: TEXAS INSTRUMENTS FRANCE, 06271 Villeneuve Loubet Cédex (FR)
(72) Inventor: Chauvel, Gérard, Les Vergers de Val Constance, 06600 Antibes (FR); d'Inverno, Dominique, 06270 Villeneuve-Loubet (FR); Lasserre, Serge, 83600 Frejus (FR)
(74) Representative: Obolensky, Michel

(57) **Abstract**

A cache memory architecture (50), which may be, for example, a set associative cache memory, has a cache controller (52) with an internal register for storing the address of the active line currently latched in the output buffer of the high speed cache data array (56) which stores the cached data values from the main memory. If a memory access request specifies an address which would be contained in the active line, the cache look-up mechanisms in the tag array (54) and the data array (56) are disabled and the data is taken from the output buffer.

## Description

### BACKGROUND OF THE INVENTION

### 1. TECHNICAL FIELD

This invention relates in general to computing devices and, more particularly, to method and apparatus for providing efficient caching of data.

### 2. DESCRIPTION OF THE RELATED ART

Most modern day processing devices utilize a cache memory to increase processing speed. A cache memory acts as an intermediary between a processing circuit, such as a general purpose processor or a digital signal processor, and a memory bank, typically a dynamic random access memory (DRAM). The cache memory, typically a static random access memory (SRAM), is generally significantly smaller than the main memory bank (in terms of storage capacity), but significantly faster. The cache memory retains a portion of the data in the memory bank. When the processor accesses data, the cache memory is checked first to see if the data resides in the cache; if so, a "cache hit" ensues and data is taken from the cache memory which can supply the data at high speed responsive to the memory access request. On the other hand, if the data does not reside in the cache; if so, a "cache miss" ensues and data is taken from the memory bank. After a cache miss, the processor will generally be forced to wait for several clock cycles while the data is retrieved from the memory bank.

Cache architectures often have hit rates in the 90-95% rates, depending upon the application The actual efficiency depends upon a number of factors, induding the caching scheme employed, the size of the cache, and the application being run by the processor. Cache memories thus allow slower, less expensive, memory to store a large amount of data, while storing the portion of the data most likely to be accessed in the high speed cache memory.

While caches have significantly increased the speed at which data can be retrieved from the memory bank, cache architectures themselves can be slow relative to the capabilities of high speed processors. Further, a cache memory dissipates significant amounts of power, which is a particular concern to mobile electronic devices. Therefore, a need has arisen for a high speed, low power, cache architecture.

### BRIEF SUMMARY OF THE INVENTION

The present invention provides a method and apparatus for caching data The output of a cache memory is latched in an output buffer. Upon receiving a memory address, the cache determines whether the data associated with the memory address is stored in the output buffer. If the data associated with the memory address is stored in the output buffer, the data is retrieved from the output buffer. If the data associated with the memory address is not stored in the output buffer, the cache determines whether the data associated with the memory address is stored in the cache memory.

The present invention provides significant advantages over the prior art. Since the same data line in the cache memory may be hit multiple times in succession, the invention bypasses the cache lookup circuitry when the data is available in the output buffer associated with the cache memory. This can significantly reduce the power consumed by the cache circuitry and increase -the speed of data retrieval allowing greater processor speed.

### BRIEF DESCRIPTION OF THE SEVERAL VIEWS OF THE DRAWINGS

For a more complete understanding of the present invention, and the advantages thereof, reference is now made to the following descriptions taken in conjunction with the accompanying drawings, in which:
Figure 1 illustrates a perspective view of a smartphone;
Figure 2 illustrates a block diagram of an mobile electronic device architecture which could be used in the smartphone of Figure 1 or other mobile electronic devices;
Figure 3 illustrates a block diagram of a cache architecture which could be used in the mobile electronic device architecture of Figure 2 and in other processing devices; and
Figure 4 illustrates a flow diagram describing the operation of the cache architecture of Figure 3.

### DETAILED DESCRIPTION OF THE INVENTION

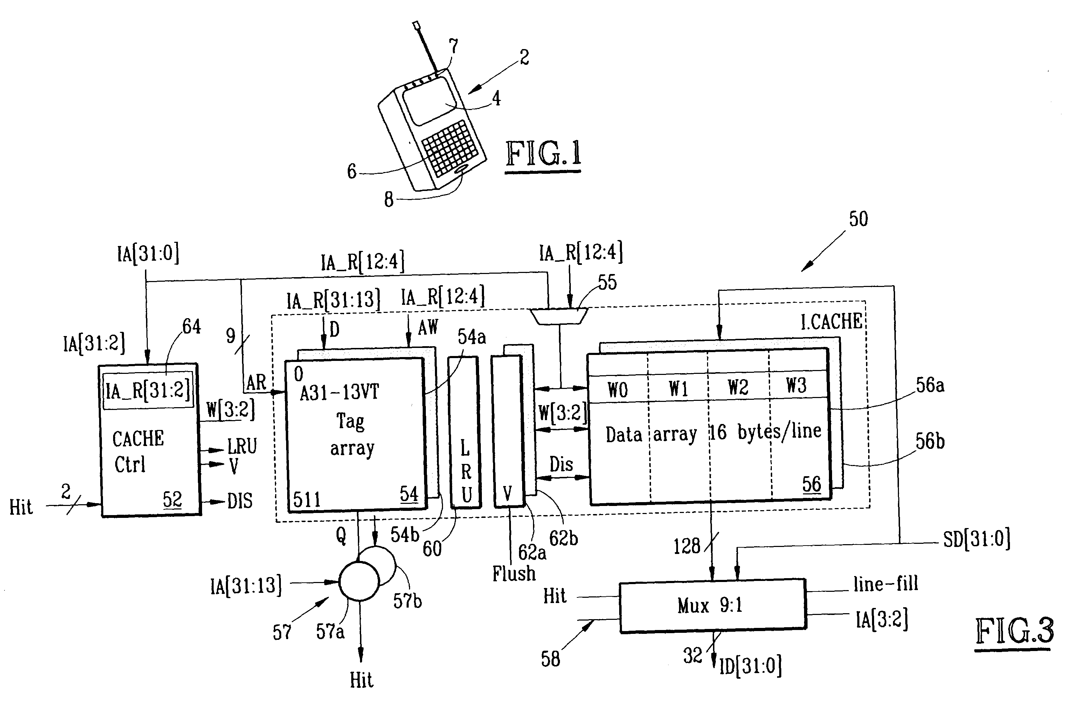

The present invention is best understood in relation to Figures 1 - 4 of the drawings, like numerals being used for like elements of the various drawings.

Figure 1 illustrate a Smartphone 2 which combines the ability for wireless transmission of voice and data along with processing capabilities similar to a personal digital assistant (PDA) or mobile computer. Smartphone 2 includes a display 4, keyboard 6, speaker 7 and microphone 8.

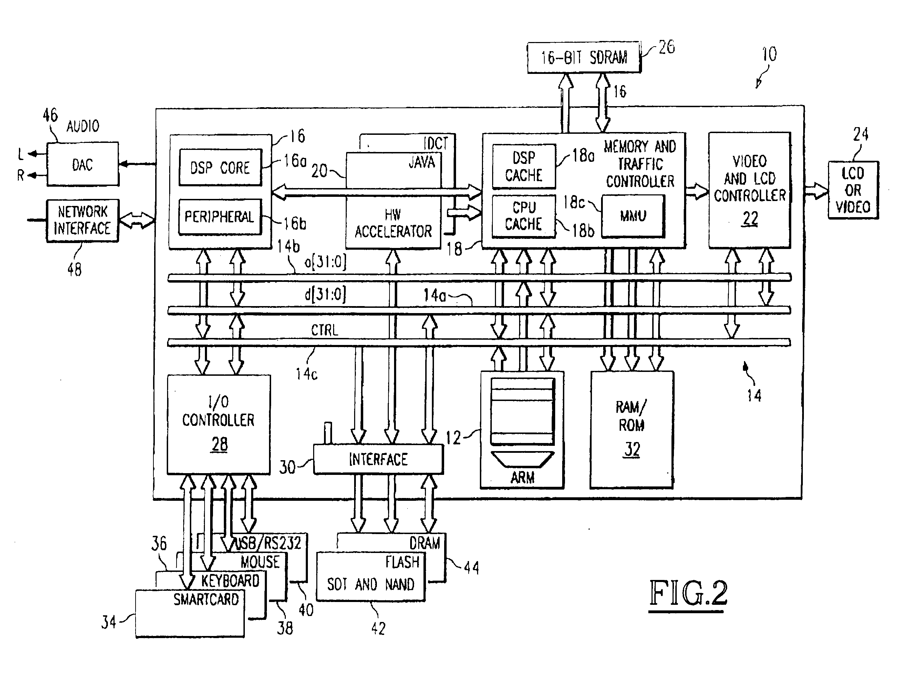

Figure 2 illustrates an exemplary embodiment of a general wireless data platform architecture, which could be used for example, in the implementation of Smartphone 2, a PDA, or other mobile electronic device. The wireless data platform 10 includes a general purpose (Host) processor 12 coupled to bus structure 14, including data bus 14a, address bus 14b and control bus 14c. One or more DSPs (or other coprocessors) 16, including the core processor 16a and the peripheral interface 16b, are coupled to bus 14 and to memory and traffic controller 18, which includes a DSP cache memory 18a, a CPU cache 18b, and a MMU (memory management unit) 18c. A hardware accelerator circuit 20 (for accelerating a portable language such as JAVA) and a video and LCD controller 22 are also coupled to the memory and traffic controller 18. The output of the video and LCD controller is coupled to display 4.

Memory & traffic controller 18 is coupled to bus 14 and to the main memory 26, shown as an SDRAM (synchronous dynamic random access memory). Bus 14 is also connected to I/O controller 28, interface 30, and RAM/ROM 32. A plurality of devices could be coupled to the wireless data platform 10, such as smartcard 34, keyboard 36, mouse 38, or one or more serial ports 40, such as a USB (universal serial bus) port or an RS232 serial port. Interface 30 can couple to a flash memory card 42 and/or a DRAM card 44. The peripheral interface 16b can couple the DSP 16 to a DAC (digital to analog converter) 46, a network interface 48 or to other devices.

In the preferred embodiment, the wireless data platform 10 of Figure 2 utilizes both a general purpose processor 12 and a DSP 16. Unlike current devices in which the DSP 16 is dedicated to specific fixed functions, the DSP 16 of Figure 2 can be used for any number of functions. This allows the user to derive the full benefit of the DSP 16.

One main area in which the DSP 16 can be used is in connection with the man-machine interface (MMI). Importantly, functions like speech recognition, image and video compression and decompression, data encryption, text-to-speech conversion, and so on, can be performed much more efficiently using the DSP 16. The present architecture allows new functions and enhancements to be easily added to wireless data platform 10.

It should be noted that the wireless data platform 10 is a general block diagram and many modifications could be made. For example, Figure 2 illustrates separate DSP and processor caches 18a and 18b. As would be known to one skilled in the art, a unified cache could also be used in an alternative embodiment. Further, the hardware acceleration circuit 20 is an optional item. Such devices speed the execution of languages such as JAVA; however, the circuit is not necessary for operation of the device. Further, although the illustrated embodiment shows a single DSP, multiple DSPs (or other coprocessors) could be coupled to the buses.

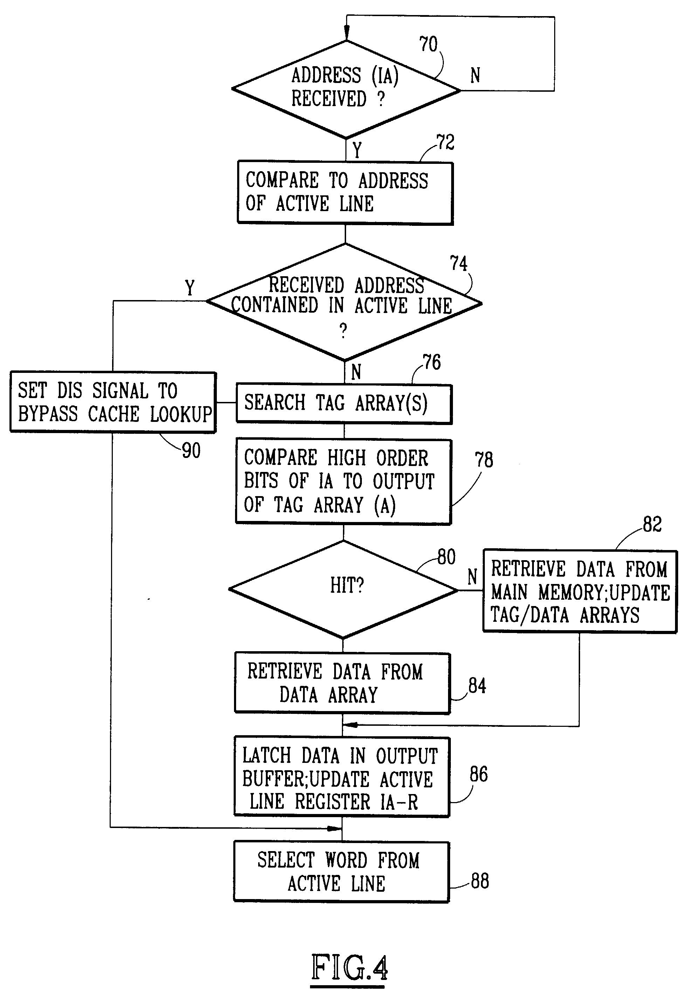

Figure 3 illustrates a cache architecture 50 which can greatly increase the efficiency and speed of a cache memory. While this cache architecture is specifically shown for the instruction cache, it should be noted that the cache architecture 50 could be used for a data cache or a unified data/instruction cache (with minor modifications) as well. Further, this cache architecture could be used in conjunction with any processing device which would benefit from a cache memory, including smartphones, PDAs, palmtop computers, notebook computers, desktop computers and so on.

In the cache architecture 50, a cache controller 52 receives a memory address, in this case a 32-bit instruction address, IA[31:2], where "[31:2]" indicates that the cache controller is receiving bits "2" through "31" of the 32-bit address. The 32-bit address corresponds to an addressable memory space of 2³² = 4 Gigabytes or 1 Gigawords (where a word is set to four bytes). The cache controller 52 is coupled to a tag array 54 and a data array 56. The illustrated cache architecture is arranged as a two-way set associative cache; therefore, both the tag array and the data array have two memory planes, 54a-b and 56a-b, respectively. In the illustrated embodiment, each plane 54a-b of the tag array is arranged as a 512x20 memory array. The outputs of planes 54a and 54b are output to respective comparators 57a and 57b. IA[31:13] are also coupled to both comparators 57a and 57b. Each comparator 57a and 57b generates a one-bit output, combined to form a two-bit HIT signal. The tag array 54 is an asynchronous dual port memory where Q is the output data bus, AR is the address read bus, D is the input data bus and AW is the address write bus. The IA[12:4] signal is connected to AR.

Similarly, each plane 56a-b of the data array is arranged as 512x128. Each of the 128-bit lines is addressable as four words by bits IA[12:4]. Each word in a line is addressable individually by IA[3:2]. The output of each data array 56 is coupled to multiplexer 58, along with the output of a main memory SD[31:0] (which provides the data in the instance HIT="00"). The multiplexer 58 is shown as a 9:1 multiplexer which selects between four 32-bit words from the first plane of tag memory 56a, four 32-bit words from the second plane of tag memory 56b and one 32-bit word from the main memory. The output of multiplexer 58 is controlled by IA[3:2] (which indicates the selected word in the line), the 2-bit HIT signal (which indicates which plane 56a or 56b had the hit) from the comparators 57 an the fill-line signal (which indicates that the word comes from the main memory due to a miss). Following a miss, words are presented to the processor on the fly. Thus, if a miss accesses the first word of a fine, the processor does not need to wait until the end of the line load.

In addition, a least recent unit (LRU) 60 and valid bit arrays 62a-b are coupled to the tag array 54.

Cache controller 52 has an internal register 64, which stores the address of the "active" line, which is the line of data available in the output buffer of the data array 56 (IA_R[32;2]). The cache controller 52 outputs a disable signal if the requested address is equal to the address in register 64 (i.e., IA[31:2]=IA_R[32:2]). This aspect will be discussed in greater detail hereinbelow.

It should be noted that the particular structure of the cache 50 (i.e, two-way set associative), sizes of the tag and data arrays, and of the instruction address are for illustrative purposes only.

In a set associative cache, each memory location in the main memory (the "main memory" is the memory whose data is cached by the cache architecture) corresponds to an address in the data array. Since the data array is generally much smaller than the main memory, each address in the data array is mapped to many addresses in the main memory. Data from a specific memory address can exist in any one of the sets of the associative cache.

The operation of a set associative cache is well known in the art and is summarized herein below for a read operation. When an address IA[31:0] is received for a memory access, IA[12:4] are used as an address into each plane 54a and 54b of the tag array 54. Each plane of the tag array 54 outputs high order bits A[31:13] responsive to the address. A[31:13] identify which address in the main memory currently has its data stored in the respective plane 54a-b. A[31:13] from each plane 54a and 54b is compared in respective comparator 57a and 57b with the high order bits of the current address IA[31:13]. If the high order addresses match in one of the planes (a cache hit), then the data for that memory address can be retrieved from the corresponding data array; if there is no match (a cache miss), the data must be retrieved from the main memory. Each memory address in the tag memory has a corresponding valid bit. These bits indicate whether the data at the corresponding location in the cache is valid. The LRU 60 determines which set is updated after a cache miss.

The cache architecture 50 includes a disable feature which can significantly improve the efficiency of the operation of the cache. The incoming address IA[31:4] is compared with the corresponding bits of the address of the active line (i.e., the address of the data currently available in the embedded latches of the memory output buffer). If these addresses are equal, the steps of accessing the tag array 54 and data array 56 can be eliminated, since it is known that the requested data is currently ready for output through the multiplexer 58. IA[3:2] provide the information to the multiplexer 58 to retrieve the desired word from the active fine.

It should be noted that, in the illustrated embodiment, the output buffers of the tag arrays provide the storage device for maintaining the data of the active line; alternatively, an external memory could be provided, such as an input buffer on the multiplexer 58, to store the active line.

A flow chart describing operation of the cache architecture 50 is shown in Figure 4. In block 70, an address (IA) is received for a data read access. The relevant bits of IA (bits [31:4] in the illustrated example) are compared to the corresponding bits of the address of the active line in the output buffer of the memory in block 72. If the bits do not match in decision block 74, i.e., the requested data is not stored in the output buffer of the data array 56 of the cache memory, then the tag arrays 54a-b are accessed with the appropriate bits in block 76. The outputs of the tag arrays 54 are compared with the high order bits of the IA address to determine if there is a cache hit in blocks 78 and 80. If there no hit or if the valid bit indicates that the data is dirty, then the data is retrieved from main memory in block 82 and the data and tag arrays are updated to store the data from main memory in the cache. Multiplexer 55 selectively switches between the IA[12:4] signal and the IA_R[12:4] signal. After a cache mass, IA_R is used to keep the address stable for the duration of the line load from main memory, since IA can point to an address outside the range of the line before the line is completely loaded. IA_R[31:13] (coupled to D) and IA_R[12:4] (coupled to AW) are used to update the tag array after a miss.

If there is a hit in decision block 80, then, in block 84, the line of memory which includes the requested data is retrieved from data array 56, responsive to the low order address bits IA[12:4]. This line is latched into the output buffer and the address of the active line is updated in the active line register 64 in block 86. The word addressed by IA[31:2] is then passed through the multiplexer 58 responsive to the IA[3:2] bits and the HIT signal in block 88.

On the other hand, if the IA address points to data which is part of the active line in block 74, then the disable (DIS) signal is set in block 90. This signal stops the tag array and data array access and causes the data to be taken from the active line currently stored in the output buffer of the memory array. Consequently, when DIS is enabled, steps 76-86 can be bypassed. Therefore, the energy used to access the tag array 54 and the data array 56 is conserved as these systems are disabled.

The disabling of the cache provides significant advantages. First, many operations can be eliminated when the requested data is available from the active line in the output buffer. For mobile electronic devices, this can lead to significant power savings by reducing memory accesses to the tag and data arrays 54 and 56. Secondly, the data can be immediately taken from the output buffer of the data array for a faster response.

Since the data array stores multiple words in each line, there is a substantial likelihood that successive reads will be from the same line as instructions are sequentially accessed. Further, if an instruction loop can be contained in a single line in the data array, data from the same active line can be read for many cycles. Therefore, a significant amount of energy and time can be saved by the present invention.

While the processor is accessing data from the write buffer of the data array 56, it can operate much faster than when the data needs to be accessed from the data array. For example, while the data array may be able to produce data at an 80 MHz rate, the processor may be able to read from the write buffer (without an access of the data array 56) at a rate of 160 MHz. Assuming an overall cache hit rate of 95%, and a cache line of eight instructions per line, then the following is true:
95% of the instructions come from the cache:
95%*7/8 of the time, the processor can run at 160 MHz;
95%*1/8 of the time, the processor will have a one cycle wait;
5% of the time, the processor will wait for data from main memory.

The efficiency can be further improved by increasing the number of instructions per cache line. Assuming an architecture with sixteen instructions per cache line:
95% of the Instructions come from the cache:
95%*15/16 of the time, the processor can run at 160 MHz;
95%*1/16 of the time, the processor will have a one cycle wait;
5% of the time, the processor will wait for data from main memory.

Accordingly, the cache architecture 50 allows the processor to work at speeds greater than those achievable by the cache itself.

Although the Detailed Description of the invention has been directed to certain exemplary embodiments, various modifications of these embodiments, as well as alternative embodiments, will be suggested to those skilled in the art. The invention encompasses any modifications or alternative embodiments that fall within the scope of the Claims.

## Claims

1. A method of caching data comprising the steps of:
latching the output of a cache memory in an output buffer;
receiving a memory address;
determining whether the data associated with the memory address is stored in the output buffer;
if the data associated with the memory address is stored in the output buffer, retrieving the data from the output buffer; and
if the data associated with the memory address is not stored in the output buffer, determining whether the data associated with the memory address is stored in the cache memory.

2. The method of claim 1 wherein said latching step comprises latching the output of a cache memory in an output buffer integrated with said cache memory.

3. The method of claim 1 wherein said latching step comprises latching the output of a cache memory in an output buffer external to said cache memory.

4. The method of claim and further comprising the step of storing the address associated with the data in the output buffer.

5. The method of claim 4 wherein said step of determining whether the data associated with the memory address is stored in the output buffer comprises the step of comparing the received address with the stored address.

6. The method of claim 1 and further comprising the step of generating a disable signal if the data associated with the memory address is stored in the output buffer.

7. The method of claim 6 and further comprising the step of selectively disabling cache memory accesses responsive to the disable signal.

8. A cache circuit comprising:
a cache memory accessed responsive to a receive memory address;
an output buffer for storing the output of said cache memory;
circuitry for determining whether the data associated with the memory address is stored in the output buffer;
control circuitry for:
retrieving the data from the output buffer if the data associated with the memory address is stored in the output buffer; and
accessing data from the cache memory if the data associated with the memory address is not stored in the output buffer but is available in the cache memory.

9. The cache circuit of claim 8 wherein said output buffer is integral with said cache memory.

10. The cache circuit of claim 8 wherein said storage device is external to said cache memory.

11. The cache circuit of claim 8 wherein said control circuitry includes a register for an address corresponding to the data in said output buffer.

12. The cache circuit of claim 11 wherein said control circuitry compares the address in said register with said memory address to determine whether the data associated with the memory address is stored in the output buffer.

13. The cache circuit of claim 8 wherein said control circuitry generates a disable signal if the data associated with the memory address is stored in the output buffer.

14. The cache circuit of claim 13 wherein said cache memory is disabled responsive to said disable signal.

15. A processing device comprising:
a processor;
a main memory; and
a cache circuit coupled to said processor and said main memory, said cache circuit comprising:
a cache memory accessed responsive to a receive memory address;
an output buffer for storing the output of said cache memory;
circuitry for determining whether the data associated with the memory address is stored in the output buffer;
control circuitry for:
retrieving the data from the output buffer if the data associated with the memory address is stored in the output buffer; and
accessing data from the cache memory if the data associated with the memory address is not stored in the output buffer but is available in the cache memory.

16. The processing device of claim 15 wherein said output buffer is integral with said cache memory.

17. The processing device of claim 15 wherein said storage device is external to said cache memory.

18. The processing device of claim 15 wherein said control circuitry includes a register for an address corresponding to the data in said output buffer.

19. The processing device of claim 18 wherein said control circuitry compares the address in said register with said memory address to determine whether the data associated with the memory address is stored in the output buffer.

20. The processing device of claim 15 wherein said control circuitry generates a disable signal if the data associated with the memory address is stored in the output buffer.

21. The processing device of claim 20 wherein said cache memory is disabled responsive to said disable signal.
